(19) Europäisches Patentamt
European Patent Office
Office européen des brevets

(11) **EP 2 087 148 B1**

(12) **EUROPÄISCHE PATENTSCHRIFT**

(45) Veröffentlichungstag und Bekanntmachung des Hinweises auf die Patenterteilung:
**07.10.2015 Patentblatt 2015/41**

(51) Int Cl.:
*C23C 22/50* *(2006.01)*　　*C23C 8/10* *(2006.01)*
*C23C 22/06* *(2006.01)*　　*C08G 64/40* *(2006.01)*

(21) Anmeldenummer: **07819092.3**

(22) Anmeldetag: **18.10.2007**

(86) Internationale Anmeldenummer:
**PCT/EP2007/009024**

(87) Internationale Veröffentlichungsnummer:
**WO 2008/052662 (08.05.2008 Gazette 2008/19)**

(54) **VERFAHREN ZUR BEHANDLUNG VON METALLOBERFLÄCHEN**

METHOD FOR TREATING METAL SURFACES

PROCEDE POUR TRAITER DES SURFACES METALLIQUES

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **31.10.2006 DE 102006051308**

(43) Veröffentlichungstag der Anmeldung:
**12.08.2009 Patentblatt 2009/33**

(73) Patentinhaber: **Bayer Intellectual Property GmbH**
**40789 Monheim (DE)**

(72) Erfinder:
• **EBERT, Wolfgang**
**47800 Krefeld (DE)**
• **MELLIS, Rainer**
**Baytown, TX 77520-9730 (US)**
• **MEYER, Alexander**
**40489 Düsseldorf (DE)**
• **RUYTINX, Bert**
**3545 Halen (BE)**
• **KARBACH, Alexander**
**47800 Krefeld (DE)**
• **MICHALSKI-VOLLMER, Detlef**
**51381 Leverkusen (DE)**

(74) Vertreter: **BIP Patents**
**c/o Bayer Intellectual Property GmbH**
**Alfred-Nobel-Straße 10**
**40789 Monheim am Rhein (DE)**

(56) Entgegenhaltungen:
EP-A- 1 156 071　　EP-A- 1 607 202
JP-A- 2003 048 975　　US-A- 4 518 440

**EP 2 087 148 B1**

**Beschreibung**

Gegenstand der Erfindung ist ein Verfahren zur Passivierung von Metalloberflächen sowie die Verwendung dieser passivierten Materialien bei der Herstellung oder Verarbeitung von Polycarbonaten. Durch dieses Verfahren gelingt es, Polycarbonate mit einem geringen Gehalt an fluoreszierenden Partikeln herzustellen.

Bei diesen Materialien kann es sich z. B. um gegebenenfalls geheizte Rohre zum Transport von Polycarbonatschmelzen, um Rohrbündel, bzw. die inneren Oberflächen von Wärmetauschern, um Reaktionskessel oder auch um Filtrationsapparaturen bzw. andere schmelzeführende Teile von Extrudern und Pumpen handeln. Das mit Hilfe dieses Verfahrens hergestellte Polycarbonat eignet sich vor allem für qualitativ hochwertige Spritzgussartikel, insbesondere solche in denen hohe Transparenz und niedriger YI (Yellowness Index) wichtig sind, wie z. B. optische Datenspeicher, Streuscheiben oder Scheiben für den Automobilbereich allgemein. Die mit Hilfe dieser Anlagenteile hergestellten Polycarbonatgranulate bzw. Spritzgusskörper weisen einen geringen Gehalt fluoreszierender Partikel auf.

Die Herstellung von Polycarbonat erfolgt in aller Regel in Anlagenteilen, d.h. Rohren, Reaktionskesseln etc, aus Stahl bzw. aus speziellen Stahllegierungen. In diesen Anlagen wird das Polycarbonat hergestellt, gefördert, eingedampft, isoliert oder weiterverarbeitet.

Es wurde nun gefunden, dass Metalloberflächen, welche mit Polycarbonatschmelzen in Kontakt kommen, einen nachteiligen Einfluss auf die Produktqualität haben können.

So wurde gefunden, dass in diesen Anlagenteilen hergestelltes Polycarbonat eine gewisse Verunreinigung mit fluoreszierenden Partikeln aufweist, was für die Qualität von aus diesem Material hergestellten Spritzgusskörpern, Extrudaten und Folien von Nachteil ist.

Insbesondere hohe Verweilzeiten von Polycarbonatschmelzen in diesen Anlagenteilen sind von Nachteil für die Produktqualität und erhöhen die Fluoreszenzintensität im Material. So sind Polycarbonatschmelzen hergestellt nach dem Schmelzeumesterungsverfahren längere Zeit in Kontakt mit Metalloberflächen. Deshalb ist insbesondere dieses Verfahren kritisch hinsichtlich der Bildung fluoreszierender Partikel, welche die Produktqualität mindern.

Nicht nur hohe Verweilzeiten sondern auch die Größe der Metalloberfläche, die in Kontakt mit der Polymerschmelze kommt, spielt eine ernstzunehmende Rolle. So können z. B. Anlagenteile zur Filtration von Polycarbonatschmelzen kritisch für die Produktqualität sein, da hier das Polycarbonat einer großen Metalloberfläche ausgesetzt ist. Die Größe der Metalloberfläche wird unter anderem durch die Oberflächengüte bestimmt. So ist eine polierte Oberfläche vorteilhaft gegenüber einer nicht polierten.

Deshalb wurde ein Verfahren zur Vorbehandlung von metallischen Anlagenteilen, die mit Polycarbonatschmelzen in Kontakt kommen entwickelt. Durch dieses Verfahren gelingt es, ein Polycarbonat mit geringerem Gehalt an fluoreszierenden Partikeln herzustellen und somit die Produktqualität deutlich zu verbessern.

Dieses Polycarbonat eignet sich neben der Verwendung in optischen Datenspeichern ebenfalls gut für die Herstellung von Formteilen aus dem Bereich des Automotive Glazings, wie z. B. von Streulichtscheiben. Dieses Polycarbonat ist insbesondere bei solchen Anwendungen von Vorteil, bei denen eine gute Oberflächenqualität gefordert wird.

Es ist bekannt, dass die Vorbehandlung von Stählen eine Auswirkung auf die Korrosionsneigung hat. Passivierungsmethoden sind z. B. von Asami et al. in "Surface and Interface Analysis", 2004, 36(3), 220-224 oder von Virtanen et al. in "Material Science Forum" 1995, 185-188 (Passivation of Metals and Semiconductors), 965-974 beschrieben.

Keine dieser oben zitierten Veröffentlichungen betrifft die Behandlung von Metallen, die in Kontakt mit Polycarbonatschmelzen kommen. Die Problematik der Korrosion ist nicht mit den Anforderungen bei einer Polycarbonatproduktion vergleichbar. Deshalb waren die gefundenen Lösungen nicht naheliegend.

Es ist bekannt, dass durch eisenhaltige Oberflächen, die in Kontakt mit einer Polycarbonatschmelze stehen, eine Verfärbung des Polycarbonats resultieren kann. Dies ist z. B. in JP 02233733 beschrieben. Zur Lösung dieses Problems wurden eisenarme Legierungen wie z. B. Alloy 59 in Kombination mit Polycarbonatschmelzen eingesetzt. Dies ist z. B. in EP 1222231 B1, WO 2000064554, WO 9954381, WO 2000007684 oder in JP 07171873 beschrieben. Abgesehen davon, dass Konstruktionen in Alloy/Hastelloy sehr teuer sind, so dass immer nur Teilbereiche einer Anlage aus diesen Materialien gebaut werden können, sind in keiner dieser Veröffentlichungen bestimmte Vorbehandlungen der Legierungen beschrieben, mit denen die Bildung fluoreszierender Partikel in Polycarbonatschmelzen verhindert werden können.

In EP 0 410 425 A2 werden Spritzgussartikel aus Polycarbonat mit einem geringen Staubanteil beschrieben. Dies wird dadurch erreicht, dass bestimmte Maschinenteile der Spritzgussmaschine, wie z. B. die Schneckenelemente, aus bestimmten korrosionsbeständigen Materialien wie z. B. Hastelloy bestehen. Es wird kein Zusammenhang mit fluoreszierenden Körpern berichtet und keine Vorbehandlungsmethode beschrieben.

In JP 2002 12 64 25 wird eine Schmelzefiltrationsanlage bestehend aus einem Edelstahlfilter zur Reduktion von Gelpartikeln beschrieben. Es wird kein Zusammenhang mit fluoreszierenden Körpern berichtet und keine Vorbehandlungsmethode beschrieben.

In EP-A 1156071 wird eine Passivierung von Filtermedien mit schwachen Säuren wie z. B. Phenol beschrieben.

Dadurch wird erreicht, dass sich der Yellowness Index des filtrierten Materials verbessert. Fluoreszierende Partikel werden nicht beschrieben. Für die Reduktion fluoreszierender Partikel ist diese Methode ungeeignet. In dieser Publikation wird eine thermische Behandlung in Stickstoff beschrieben, während die vorliegende Erfindung oxidativ vorbehandelt.

In US 4518440 wird ein Verfahren zur Passivierung von Metalloberflächen mit Mineralsäuren beschrieben. Nach der beschriebenen Methode werden diese Oberflächen, die nach diesem Prozess einen bestimmten Chromoxid- und Eisenoxidgehalt aufweisen, generell passiviert. Auswirkungen auf die Bildung fluoreszierender Partikel in Polycarbonatschmelzen sind nicht beschrieben. Vergleichsversuche, in denen Polycarbonatschmelzen mit Eisenoxid und/oder Chromoxid behandelt wurden, zeigen, das es in Polycarbonatschmelzen zu einem deutlichen Anstieg in der Fluoreszenz kommt. Berücksichtigt man diese Ergebnisse, so ist diese Passivierungsmethode für Polycarbonatschmelzen ungeeignet.

In JP-4-161210 wird die Beschichtung von Filtermedien, die zur Filtration von Polymerschmelzen dienen, mit Chromoxid beschrieben. Diese Beschichtung gelingt durch einen nasschemischen Prozess. Die Auswirkungen auf die Bildung fluoreszierender Partikel ist nicht beschrieben. Durch diese Methode wird eine Reduktion an Gelkörpern erreicht. Im Gegensatz dazu wird hier die Passivierung vor allem durch einen thermischen Prozess erreicht. Die hier beschriebene erfindungsgemäße Passivierung ist deutlich effektiver, hinsichtlich der Bildung fluoreszierender Partikel in PC-Schmelzen.

In JP 2003048975 wird die Herstellung von Polycarbonat im Schmelzeumesterungsprozess beschrieben. Bei diesem Prozess werden die aufgeschmolzenen Rohstoffe einer Filtration durch einen passivierten Filter unterworfen. Diese Passivierung erfolgt mit Säure und/oder Temperung unter Inertgasatmosphäre. Auf die Bildung fluoreszierender Partikel wird nicht eingegangen. Die beschriebene Methode weicht von der hier offengelegten Methode ab, da hier oxidative Passivierungsmethoden eingesetzt werden. Der in JP 2003048975 beschriebene Filter wird nicht zur Schmelzefiltration von Polycarbonat eingesetzt.

Keine der oben genannten Veröffentlichungen behandelt den Gehalt an fluoreszierenden Verunreinigungen in Polycarbonat. Die oben genannten Methoden führen nicht zu einer effektiven Reduktion von fluoreszierenden Partikeln in Polycarbonat.

Es wurde überraschend gefunden, dass eine spezielle thermische Behandlung von Edelstahl oder Edelstahllegierungen zu einer signifikanten Reduktion von fluoreszierenden Partikeln in der Polycarbonatmatrix führt. Sowohl bei nicht passivierten als auch bei durch Säurebehandlung passivierten Edelstahl und Edelstahllegierungen führt diese Methode zu einer deutlichen Reduktion der fluoreszierenden Partikel.

Gegenstand der Erfindung ist daher ein Verfahren zur Behandlung von Metalloberflächen, die bei der Herstellung oder Verarbeitung von Polymeren, vorzugsweise von Polycarbonat mit der Polymerschmelze in Kontakt kommen, wobei in einem ersten Schritt die Metalloberflächen mit Mineralsäure behandelt werden und in einem zweiten Schritt die Metalloberflächen in oxidativer Atmosphäre wie Luft thermisch vorbehandelt werden.

Die thermische Vorbehandlung wird im Allgemeinen bei Temperaturen von 200 bis 1200°C, je nach Art der Temperung bzw. der entsprechenden Tempertemperatur durchgeführt. Die Dauer der thermischen Vorbehandlung beträgt im Allgemeinen 1 Minute bis 48 Stunden, bevorzugt 2 Minuten bis 30 Stunden und insbesondere 10 Minuten bis 24 Stunden und ist abhängig von der Art der Temperung.

Die thermische Vorbehandlung kann dabei durch Glühen der Metalloberfläche in einer Flamme, durch Temperung in einem Muffelofen, durch Temperung im Wirbelbett mit Sand oder durch Temperung in einem Umluftofen erfolgen.

Beim Glühen der Metalloberflächen in einer Gasflamme liegen die Temperaturen üblicherweise zwischen 600 und 1500°C, bevorzugt zwischen 800 und 1200°C, bei der Temperung im Muffelofen zwischen 300 und 1000°C, bevorzugt zwischen 600 und 900°C und bei der Temperung im Umluftofen bei 200 bis 500°C, bevorzugt bei 300 bis 400°C.

Die Dauer der thermischen Vorbehandlung bei Temperaturen oberhalb von 600°C beträgt im Allgemeinen 1 Minute bis 1 Stunde, im Temperaturbereich von 300 bis 700°C in der Regel 30 Minuten bis 48 Stunden, bevorzugt 30 Minuten bis 30 Stunden, insbesondere 2 bis 25 Stunden, bei Temperaturen von 300 bis 500°C im Allgemeinen 1 bis 48 Stunden, bevorzugt 2 bis 30 Stunden, insbesondere 4 bis 25 Stunden.

Das Ausflammen der durch Glühen behandelten Metallteile erfolgt in einem Sand- oder Wirbelbett.

Besonders bevorzugt werden die Metalloberflächen des Filtervlieses im Umluftofen bei 200 bis 500°C, bevorzugt 250 bis 450°C, insbesondere 300 bis 400°C für bis zu 35 Stunden , bevorzugt 4 bis 30 Stunden, insbesondere 8 bis 26 Stunden getempert. Insbesondere bevorzugt ist eine Temperatur von 350°C für 24 Stunden.

Metallteile, die für die Vorbehandlung in Frage kommen, sind Metallteile, die mit der Polymerschmelze in Kontakt kommen. Dazu gehören beispielsweise Rohre, Zuleitungen, Filter und Kessel. Weitere Beispiele sind an anderer Stelle der vorliegenden Anmeldung aufgeführt. Die erfindungsgemäß vorbehandelten Metallteile sind im Allgemeinen innerhalb von 14, bevorzugt 10, besonders bevorzugt 8, insbesondere 3 Tagen nach der Temperung zu verwenden.

Die Metallteile können vor Temperung in geeigneter Weise gereinigt, z. B. entfettet, werden, z. B. durch Behandlung mit Methylenchlorid. Durch Behandlung mit Mineralsäure, insbesondere Salpetersäure in Konzentrationen von 0.5 - 65 Gew. %, bevorzugt 5 - 30 Gew. %, bei Temperaturen von 10 bis 100°C, bevorzugt bei Temperaturen von 15 bis 80°C und einer Behandlungszeit von 10 Minuten bis 24 Stunden, bevorzugt 30 Minuten bis 8 Stunden oder durch Phosphorsäure in Konzentrationen von 0.5 bis 85 Gew. %, bevorzugt 5 - 40 Gew. %, bei Temperaturen von 10 bis 150°C, bevorzugt bei 15 bis 80°C, bei Behandlungszeiten von 10 Minuten bis 24 Stunden, bevorzugt 30 Minuten bis 8 Stunden kann eine Passivierung erreicht werden. Diese muss jedoch zwangsläufig von einem thermischen Behandlungsschritt gemäß vorliegender Erfindung gefolgt werden um die gewünschte Wirkung zu erzielen.

Die erfindungsgemäß vorbehandelten Metallteile können sowohl beim Phasengrenzflächenverfahren als auch beim Schmelzeumesterungsverfahren oder der Verarbeitung von Polymeren eingesetzt werden, überall an Stellen der Produktionsanlage, an denen Metallteile mit der Polymerschmelze in Kontakt kommen. Dies gilt insbesondere bei Anlagenteilen, die eine hohe Temperaturbelastung erzeugen, wie Konzentrationsaggregate, Pumpen oder Wärmetauscher.

Die erfindungsgemäß behandelten Filter bzw. Filtervliese können für die so genannte Tiefenfiltration von Polycarbonat eingesetzt werden.

Auf diese Weise lassen sich Polymere, insbesondere Polycarbonate, herstellen, die sich durch einen geringen Gehalt an fluoreszierenden Partikeln auszeichnen.

So weisen Polycarbonate, die unter Verwendung von erfindungsgemäß vorbehandelten Metallteilen hergestellt oder verarbeitet wurden, eine Partikelzahl an transparenten fluoreszierenden Partikeln der Größe zwischen 15 - 250 $\mu$m 0.1 - 1.8 counts/g, gemessen nach Lösen des Polycarbonates in Methylenchlorid und Filtration durch einen Teflonfilter mit 5 $\mu$m Porengröße bei einer Anregungswellenlänge von 400 - 440 nm und einer 25-fachen Gesamtvergrößerung bei einer Belichtungszeit von 40 ms, auf.

Hierbei wird ein auf dem Teflonfilter zusammenhängender fluoreszierender Bereich bei den oben angegebenen Bedingungen (Wellenlänge, Gesamtvergrößerung, Belichtungszeit) automatisch detektiert und als 1 "count" gezählt. Die einzelnen fluoreszierenden Partikel, die sich auf dem Teflonfilter befinden, werden ausgezählt. Die Gesamtzahl der fluoreszierenden Partikel wird durch die Masse der im jeweiligen Ansatz eingewogenen Polycarbonatschmelze dividiert und man erhält die Partikelanzahl (fluoreszierend) bezogen auf 1 Gramm Polycarbonat (counts/g).

Die Herstellung der Polycarbonate erfolgt u. a. nach dem Phasengrenzflächenverfahren. Dieses Verfahren zur Polycarbonatsynthese ist mannigfaltig in der Literatur beschrieben; beispielhaft sei auf H. Schnell, Chemistry and Physics of Polycarbonates, Polymer Reviews, Vol. 9, Interscience Publishers, New York 1964 S. 33 ff., auf Polymer Reviews, Vol. 10, "Condensation Polymers by Interfacial and Solution Methods", Paul W. Morgan, Interscience Publishers, New York 1965, Kap. VIII, S. 325, auf Dres. U. Grigo, K. Kircher und P. R- Müller "Polycarbonate" in Becker/Braun, Kunststoff-Handbuch, Band 3/1, Polycarbonate, Polyacetale, Polyester, Celluloseester, Carl Hanser Verlag München, Wien 1992, S. 118-145 sowie auf EP-A 0 517 044 verwiesen.

Gemäß diesem Verfahren erfolgt die Phosgenierung eines in wässrig-alkalischer Lösung (oder Suspension) vorgelegten Dinatriumsalzes eines Bisphenols (oder eines Gemisches verschiedener Bisphenole) in Gegenwart eines inerten organischen Lösungsmittels oder Lösungsmittelgemisches, welches eine zweite Phase ausbildet. Die entstehenden, hauptsächlich in der organischen Phase vorliegenden, Oligocarbonate werden mit Hilfe geeigneter Katalysatoren zu hochmolekularen, in der organischen Phase gelösten, Polycarbonaten aufkondensiert. Die organische Phase wird schließlich abgetrennt und das Polycarbonat durch verschiedene Aufarbeitungsschritte daraus isoliert.

Für die Herstellung der erfindungsgemäß zu verwendenden Polycarbonate geeignete Diphenole sind beispielsweise Hydrochinon, Resorcin, Dihydroxydiphenyl, Bis-(hydroxyphenyl)-alkane, Bis(hydroxy-phenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, $\alpha,\alpha'$-Bis-(hydroxyphenyl)-diisopropylbenzole, sowie deren alkylierte, kemalkylierte und kernhalogenierte Verbindungen.

Bevorzugte Diphenole sind 4,4'-Dihydroxydiphenyl, 2,2-Bis-(4-hydroxyphenyl)-1-phenyl-propan, 1,1-Bis-(4-hydroxyphenyl)-phenyl-ethan, 2,2-Bis-(4-hydroxyphenyl)propan, 2,4-Bis-(4-hydroxyphenyl)-2-methylbutan, 1,3-Bis-[2-(4-hydroxyphenyl)-2-propyl]benzol (Bisphenol M), 2,2-Bis-(3-methyl-4-hydroxyphenyl)-propan, Bis-(3,5-dimethyl-4-hydroxyphenyl)-methan, 2,2-Bis-(3,5-di-methyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol, 1-Bis-(4-hydroxyphenyl)-cyclohexan und 1,1-Bis-(4-hydroxyphenyl)-3,3,5-trimethylcyclohexan (Bisphenol TMC) sowie deren Mischungen.

Besonders bevorzugte Diphenole sind 4,4'-Dihydroxydiphenyl, 1,1-Bis-(4-hydroxyphenyl)-phenyl-ethan, 2,2-Bis-(4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC) sowie deren Mischungen.

Diese und weitere geeignete Diphenole sind z. B. in den US-A -PS 2 999 835, 3 148 172, 2 991 273, 3 271 367, 4 982 014 und 2 999 846, in den deutschen Offenlegungsschriften 1 570 703, 2 063 050, 2 036 052, 2 211 956 und 3 832 396, der französischen Patentschrift 1 561 518, in der Monographie "H. Schnell, Chemistry and Physics of Polycarbonates, Interscience Publishers, New York 1964, S. 28ff; S.102ff", und in "D.G. Legrand, J.T. Bendler, Handbook of Polycarbonate Science and Technology, Marcel Dekker New York 2000, S. 72ff." beschrieben

Im Falle der Homopolycarbonate wird nur ein Diphenol eingesetzt, im Falle der Copolycarbonate werden mehrere Diphenole eingesetzt, wobei selbstverständlich die verwendeten Bisphenole, wie auch alle anderen der Synthese zugesetzten Chemikalien und Hilfsstoffe mit den aus ihrer eigenen Synthese, Handhabung und Lagerung stammenden Verunreinigungen kontaminiert sein können, obwohl es wünschenswert ist, mit möglichst sauberen Rohstoffen zu arbeiten.

Die zur Regelung des Molekulargewichtes benötigten monofunktionellen Kettenabbrecher, wie Phenol oder Alkylphenole, insbesondere Phenol, p-tert.Butylphenol, iso-Octylphenol, Cumylphenol, deren Chlorkohlensäureester oder Säurechloride von Monocarbonsäuren bzw. Gemischen aus diesen Kettenabbrechern, werden entweder mit dem Bisphenolat bzw. den Bisphenolaten der Reaktion zugeführt oder aber zu jedem beliebigen Zeitpunkt der Synthese zugesetzt, solange im Reaktionsgemisch noch Phosgen oder Chlorkohlensäureendgruppen vorhanden sind bzw. im Falle der Säurechloride und Chlorkohlensäureester als Kettenabbrecher solange genügend phenolische Endgruppen des sich bildenden Polymers zur Verfügung stehen. Vorzugsweise werden der oder die Kettenabbrecher jedoch nach der Phosgenierung an einem Ort oder zu einem Zeitpunkt zugegeben, wenn kein Phosgen mehr vorliegt, aber der Katalysator noch nicht dosiert wurde, bzw. sie werden vor dem Katalysator, mit dem Katalysator zusammen oder parallel dazu dosiert.

In der gleichen Weise werden eventuell zu verwendende Verzweiger oder Verzweigermischungen der Synthese zugesetzt, üblicherweise jedoch vor den Kettenabbrechern. Üblicherweise werden Trisphenole, Quarterphenole oder Säurechloride von Tri- oder Tetracarbonsäuren verwendet, oder auch Gemische der Polyphenole oder der Säurechloride.

Einige der verwendbaren Verbindungen mit drei oder mehr als drei phenolischen Hydroxylgruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-(4,4-bis-(4-hydroxyphenyl)-cyclohexyl]-propan, 2,4-Bis-(4-hydroxyphenyl-isopropyl)-phenol, Tetra-(4-hydroxyphenyl)-methan, 3,3-Bis-(3-methyl-4-hydroxyphenyl)-2-oxo-2,3-dihydroindol.

Einige der sonstigen trifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Die in der Phasengrenzflächensynthese verwendeten Katalysatoren sind tert. Amine, insbesondere Triethylamin, Tributylamin, Trioctylamin, N-Ethylpiperidin, N-Methylpiperidin, N-i/n-Propylpiperidin; quartäre Ammoniumsalze wie Tetrabutylammonium- / Tributylbenzylammonium- / Tetraethylammonium- hydroxid / -chlorid / -bromid / -hydrogen-sulfat / -tetrafluoroborat; sowie die den Ammoniumverbindungen entsprechenden Phosphoniumverbindungen. Diese Verbindungen sind als typische Phasengrenzflächen-Katalysatoren in der Literatur beschrieben, kommerziell erhältlich und dem Fachmann geläufig. Die Katalysatoren können einzeln, im Gemisch oder auch neben- und nacheinander der Synthese zugesetzt werden, gegebenenfalls auch vor der Phosgenierung, bevorzugt sind jedoch Dosierungen nach der Phosgeneintragung, es sei denn, es wird eine Oniumverbindung oder Gemische aus Oniumverbindungen als Katalysatoren verwendet, dann ist eine Zugabe vor der Phosgendosierung bevorzugt. Die Dosierung des Katalysators oder der Katalysatoren kann in Substanz, in einem inerten Lösungsmittel, vorzugsweise dem der Polycarbonatsynthese, oder auch als wässrige Lösung, im Falle der tert. Amine dann als deren Ammoniumsalze mit Säuren, bevorzugt Mineralsäuren, insbesondere Salzsäure, erfolgen. Bei Verwendung mehrerer Katalysatoren oder der Dosierung von Teilmengen der Katalysatorgesamtmenge können natürlich auch unterschiedliche Dosierungsweisen an verschiedenen Orten oder zu verschiedenen Zeiten vorgenommen werden. Die Gesamtmenge der verwendeten Katalysatoren liegt zwischen 0,001 bis 10 Mol % bezogen auf Mole eingesetzte Bisphenole, bevorzugt 0,01 bis 8 Mol %, besonders bevorzugt 0,05 bis 5 Mol %.

Die Durchführung der Polycarbonatsynthese kann kontinuierlich oder diskontinuierlich geschehen. Die Reaktion kann in daher in Rührkesseln, Rohrreaktoren, Umpumpreaktoren oder Rührkesselkaskaden oder deren Kombinationen erfolgen. Bevorzugte Medien für diese Rührkessel oder Rohrreaktoren und Rohrleitungen etc. sind z. B. V4A-Stahl oder Hastelloy-C.

Die Wäsche der Polycarbonatlösung erfolgt durch Durchläufe durch Absetzkessel, Rührkessel, Coalescer oder Separatoren bzw. Kombinationen aus diesen Maßnahmen. Auch diese Anlagenteile bestehen ebenfalls aus den oben genannten Materialien.

Die Isolierung des Polymers aus der Lösung kann durch Verdampfen des Lösungsmittels mittels Temperatur, Vakuum oder eines erhitzten Schleppgases erfolgen. Andere Isolierungsmethoden sind Kristallisation und Fällung. Auch diese Verfahrensschritte werden in Behältnissen aus den oben genannten Medien durchgeführt. Bei einem thermischen Aufarbeitungsverfahren kommt infolge der höheren Temperatur dem verwendeten Material eine besondere Bedeutung zu. Ein solches thermisches Aufarbeitungsverfahren ist z. B. die Abdestillation des Lösungsmittels durch Überhitzung und Entspannung einem so genannten "Flash-Verfahren" (siehe auch "Thermische Trennverfahren", VCH Verlagsanstalt 1988, S. 114). Alle diese Verfahren sind in der Patentliteratur und in Lehrbüchern beschrieben und dem Fachmann geläufig.

Bei der Entfernung des Lösungsmittels durch Temperatur (Abdestillieren) oder dem technisch effektiveren Flash-Verfahren erhält man hochkonzentrierte Polymerschmelzen.

Aus den so erhaltenen hochkonzentrierten Polymerschmelzen können die Reste des Lösungsmittels entweder direkt aus der Schmelze mit Ausdampfextrudern (BE-A 866 991, EP-A 0 411 510, US-A 4 980 105, DE-A 33 32 065), Dünnschichtverdampfern (EP-A 0 267 025), Fallfilmverdampfern, Strangverdampfern oder durch Friktionskompaktierung (EP-A 0 460 450), gegebenenfalls auch unter Zusatz eines Schleppmittels, wie Stickstoff öder Kohlendioxid oder unter Verwendung von Vakuum (EP-A 0 039 96, EP-A 0 256 003, US-A 4 423 207), entfernt werden. Auch hier kommt dem verwendeten Werkstoff, der mit der Polymerschmerze in Kontakt steht eine besondere Rolle zu - auch diese Werkstoffe bestehen aus den oben genannten Medien.

Insbesondere ist die erfindungsgemäße Vorbehandlung der metallischen Oberflächen wichtig bei Apparaturen und Rohren mit Temperaturen über 200°C, insbesondere dann, wenn diese Teile elektrisch-, flüssigkeits-, oder dampfbeheizt sind, besonders dann wenn die Wandtemperaturen oberhalb 240°C, bevorzugt oberhalb 300°C liegen und die Kontaktzeit der Oberfläche mit der Polymerschmelze mehr als 10 Sekunden beträgt, oder die Temperaturdifferenz zwischen eintretender Schmelze und geheizter Oberfläche (Wandtemperatur des Metallteiles) größer als 60°C ist. Die Kontaktzeit bei Konzentrierungsschritten im Phasengrenzflächenverfahren beträgt üblicherweise mehr als 10 Sekunden und ist in der Regel kleiner als 20 Minuten, bevorzugt kleiner 15 Minuten. Die Kontaktzeit bei Schmelzeverfahren beträgt im Allgemeinen 30 Minuten bis 12 Stunden, bevorzugt 1 Stunde bis 6 Stunden.

Weiterhin ist die Verwendung der erfindungsgemäß vorbehandelten Oberflächen dann positiv, wenn die Polymerschmelze noch Reste an Monomeren insbesondere solchen mit OH- oder Cl-Endgruppen enthält, wie bei einem Restgehalt an Lösungsmittel insbesondere chlorierten Lösungsmitteln wie Chlorbenzol, Dichlormethan, Chloroform oder Tetrachlorkohlenstoff und deren Mischungen. Besonders vorteilhaft ist daher der Einsatz der erfindungsgemäß behandelten Metalloberflächen im Bereich von Schmelzetransportwegen, thermischen Aufkonzentrierungsschritten, und thermischen Mischaggregaten, also beheizten Rohrleitungen, Wärmetauschern, Flashstufen, Dünnschichtverdampfern, Fallfilm- und Rohrverdampfern, Strangverdampfern, Extruderteilen und Kesseln sofern diese Wandkontakt mit der PC-Schmelze haben.

Granulate erhält man, wenn möglich, durch direktes Abspinnen der Schmelze und anschließender Granulierung oder aber durch Verwendung von Austragsextrudern von denen in Luft oder unter Flüssigkeit, meist Wasser, abgesponnen wird. Werden Extruder benutzt, so kann man der Schmelze, vor diesem Extruder, gegebenenfalls unter Einsatz von statischen Mischern oder durch Seitenextruder im Extruder, Additive zusetzen.

Daneben ist die Herstellung von Polycarbonaten auch aus Diarylcarbonaten und Diphenolen nach dem bekannten Polycarbonatverfahren in der Schmelze, dem so genannten Schmelzumesterungsverfahren, möglich, das z. B. in WO-A 01/05866 und WO-A 01/05867 beschrieben ist. Daneben werden Umesterungsverfahren (Acetatverfahren und Phenylesterverfahren) beispielsweise in den US-A 34 94 885, 43 86 186, 46 61 580, 46 80 371 und 46 80 372, in den EP-A 26 120, 26 121, 26 684, 28 030, 39 845, 39 845, 91 602, 97 970, 79 075, 14 68 87, 15 61 03, 23 49 13 und 24 03 01 sowie in den DE-A 14 95 626 und 22 32 977 beschrieben.

Vorzugsweise ist das kontinuierliche Verfahren zur Herstellung von Polycarbonaten nach dem Schmelzeumesterungsverfahren dadurch gekennzeichnet, dass eine oder mehrere Dihydroxyarylverbindungen mit dem Diarylcarbonat, ggf. auch anderer zugesetzter Reaktanten unter Verwendung von Katalysatoren, nach einer Vorkondensation ohne Abtrennen der gebildeten Monohydroxyarylverbindung in sich dann daran anschließenden mehreren Reaktions-Verdampfer-Stufen bei schrittweise steigenden Temperaturen und schrittweise fallenden Drucken das Molekulargewicht bis zum gewünschten Niveau aufgebaut wird.

Die für die einzelnen Reaktions-Verdampfer-Stufen geeigneten Vorrichtungen, Apparate und Reaktoren sind entsprechend dem Verfahrensverlauf Wärmetauscher, Entspannungsapparate, Abscheider, Kolonnen, Verdampfer, Rührbehälter und Reaktoren oder sonstige käufliche Apparate, welche die nötige Verweilzeit bei ausgewählten Temperaturen und Drucken bereitstellen. Die gewählten Vorrichtungen können über das hier geschilderte Verfahren passiviert

Durch eine Schmelzefiltration der Polycarbonatschmelze, hergestellt nach dem Schmelzeumesterungsprozess oder nach dem Phasengrenzflächenprozess, kann die Schmelze von Verunreinigungen, wie z. B. Fremdpartikel oder vercracktes Polycarbonat befreit werden. Die Schmelze kann dabei durch einfache Metallsiebe mit Maschenweiten von 10 - 100 $\mu$m fließen. Für eine effektivere Filtration eignet sich die Tiefenfiltration mit Hilfe mehrlagiger dünner Metallgewebe oder gesinterter Metalle mit Porengrößen von 5 - 40 $\mu$m. Bevorzugt sind Filter aus Metallvliesen mit Drähten mit Durchmessern von 1 -10 $\mu$m und einer Porenweite von 5 bis 40 $\mu$m, bevorzugt 5 bis 25 $\mu$m. Eine solche Schmelzefiltration ist z. B. in EP 1199325 beschrieben.

Die folgenden Beispiele erläutern die Erfindung, sind jedoch nicht einschränkend.

Beispiele

Methode zur Bestimmung des Gehalts an fluoreszierenden Partikenl:

Die Analyse des Gehalts an fluoreszierende Partikeln erfolgt durch Filtration der betreffenden Polycarbonatprobe (50 g), gelöst in Dichlormethan (LiChrosolv; Merck:1.06044 K33506244 430) (700 ml) durch einen Teflon-Filtermembran (Fa. Bohlender GmbH, D-97847 Grünsfeld) mit 5 $\mu$m Porendurchmesser. Die Filterscheiben werden im Vakuum getrocknet und vor Umgebungsstaub durch eine Abdeckung geschützt. Nach Filtration wird die Filteroberfläche mittels eines Fluoreszenzmikroskops Axioplan 2 der Firma Zeiss AG, Deutschland, untersucht (gescannt). Es wird mit einer Anregungswellenlänge von 400 - 440 nm, einer Belichtungszeit von 40 ms pro Scan und einer 25-fachen Gesamtvergrößerung gearbeitet. Die fluoreszierenden Partikel werden detektiert und die Daten über eine Bildverarbeitungssoftware (KS 300 3.0 der Firma Zeiss AG) ausgewertet. Es werden nur Partikel mit einer charakteristischen Farbe gezählt, d.h. andere Partikel, wie z. B. Staub werden nicht berücksichtigt (bestimmt nach dem HSI-Farbmodell, siehe unten). Die Farbparameter zur Erkennung der fluoreszierenden Partikel werden so eingestellt, dass sie den Parametern der bei Fließstörungen in optischen Disks gefundenen Teilchen gleichen. Die Abrasterung der Oberfläche des Filters erfolgt automatisch über einen computergesteuerten Objekttisch (Fa. Zeiss AG).

Die einzelnen fluoreszierenden Partikel, die sich auf dem Teflonfilter befinden, werden ausgezählt. Die Gesamtzahl der fluoreszierenden Partikel wird durch die Masse der im jeweiligen Ansatz eingewogenen Polycarbonatschmelze dividiert und man erhält die Partikelanzahl (fluoreszierend) bezogen auf 1 Gramm (counts/g).

Je nach den gewählten Versuchseinstellungen können sich auch sehr große fluoreszierende Partikel bilden. Um auch die Größe der Partikel in die Bewertung einzubeziehen, wird als zweiter Wert die Partikelgrößendichte angegeben. Diesen Wert erhält man wie folgt: Die Teilchen werden in Durchmesserklassen mit Breiten von 10 $\mu$m eingeteilt. Die Zahl der Teilchen einer Klasse werden aufsummiert und mit dem Durchmesser (in $\mu$m) dieser Klasse multipliziert. Durch Aufsummierung dieser Werte über alle Durchmesserklassen und Division durch die Masse der eingesetzten Polycarbonatschmelze erhält man die Partikelgrößendichte (PD).

$$c = 1/m \times \sum_i n_i$$

c: Partikelzahl in counts/g; *m:* Masse der eingesetzten Polymerschmelze; $n_i$: Partikelzahl einer Durchmesserklasse

$$PD = 1/m \times \sum_{i=0}^{n} n_i \times d_i$$

*PD*:Partikelgrößendichte in counts*$\mu$m/g; $d_i$: Durchmesser der jeweiligen Durchmesserklasse.

Um den Einfluss der Metalloberfläche herauszuarbeiten wurde ein Edelstahl mit hoher Oberfläche verwendet. In diesen Versuchen wurde das innere Metallvlies eines Tiefenfilters, der für die Filtration von Polymerschmelzen geeignet ist, verwendet. Es handelt sich um das Filtervlies (d.h. der für die Filtration relevante Teil) eines Diskfilters (Hydac Disc 12-63-M-44-2402107/Mat.319418) bei dem nur das äußere Filtervlies verwendet wurde, d.h. Stützgewebe und Lochblende entfernt wurden. Die Metallfasern des Filters bestehen aus gepressten V4A-Fasern mit Durchmessern von ca. 5 - 7 $\mu$m. Die Porengröße des Filters beträgt ca. 5 $\mu$m.

HSI-Farbmodell:

Es werden die Partikel mit Licht einer Quecksilberdampflampe durch ein Stufenfilter mit Durchgang ab 470 nm bestrahlt. Die Farbe der Partikel wird mit einer digitalen Farbkamera Axiocam HRc der Firma Zeiss eingebaut in einem Mikroskop Axioplan 2 der Firma Zeiss nach dem HSI (Hue, Saturation, Intensity)-Farbmodell bestimmt. Die Methode ist z. B. beschrieben in "Digitale Bildverarbeitung mit dem PC", Hans-Jürgen Schlicht, Addison-Wesley, 1993. Misst man die Farbe der fluoreszierenden Partikel bei gegebener Einstellung der Beleuchtung, so findet man einen Huewert im Mittel von ca. 80°, eine Farbsättigung im Mittel von 150 Digits und eine Farbintensität im Mittel von 190 Digits. Die Farbe der Matrix liegt im Falle von Polycarbonat (Compact Disk) bei einen Huewert von ca. 75°, eine Farbsättigung im Mittel von 133 Digits und eine Farbintensität im Mittel von 36 Digits. Zur Angabe des korrekten Farbortes der Teilchen und der Matrix sind die Werte für Hue, Sättigung und Intensität kombiniert zu betrachten.

**Referenzbeispiel 1** (Blindwert / Luft)

Thermische Belastung von Polycarbonat ohne Metalleinfluss

In einen 250 ml Kolben werden 130 g Polycarbonatgranulat (Makrolon® DP1-1265, Bayer MaterialScience AG) eingehüllt. Dieser Kolben wird an Luft in ein auf 350°C vorgewärmtes Metallbad getaucht. Die Schmelze wird über einen KPG-Rührer (Glasrührer) für 1 Stunde gerührt. Die Rührgeschwindigkeit wird so gewählt, dass sich die Schmelze nicht am Rührer hochzieht. Nach der angegebenen Zeit wird die Polycarbonatschmelze in eine Aluminiumschale gegossen.

50 g der so erhaltenen erstarrten Schmelze werden in 700 ml Dichlormethan (LiChrosolv; Merck:1.06044) gelöst und über eine Teflon-Filtermembran (Bola-Filtermembran, 5 $\mu$m Porendurchmesser; Filtermembranstärke: 1 mm, Fa. Bohlender GmbH, D-97847 Grünsfeld)) filtriert. Die Auswertung der auf dem Filter zurückgehaltenen Partikel erfolgt wie oben beschrieben über eine automatisierte Detektion mit einem Fluoreszenzmikroskop. Als Ergebnis der Fluoreszenzmessung erhält man 0,68 counts/g.

Das Ergebnis der Untersuchung ist in Tabelle 1 gezeigt.

**Referenzbeispiel 2** (Blindwert unter Ar)

Es wird wie in Referenzbeispiel 1 verfahren, jedoch wird unter Argon gearbeitet. Anschließend wird die Anzahl der fluoreszierenden Partikel ausgewertet. Als Ergebnis der Fluoreszenzmessung erhält man 1,03 counts/g (s. Tabelle 1).

**Vergleichsbeispiel 3** (mit unpassiviertem Metall an Luft)

In einen 250 ml Kolben werden 130 g Polycarbonatgranulat (Makrolon® DP1-1265, Bayer MaterialScience AG), das ca. 4 Stunden bei 120°C im Vakuum getrocknet wurde, eingefüllt. An einem Glasrührer, der am unteren Ende mit einer Glasschlinge versehen ist, wird mit Hilfe der Öse ein Metallstreifen (Metall aus einem Diskfilter: Hydac Disc 12-63-M-44-2402107/Mat.319418 auf 48 x 11 x 1 mm geschnitten; es wird nur das äußere Filtervlies, das für die Filtration wirksam ist, verwendet, das Stützgewebe und das "Lochblech" werden entfernt; der Filterstreifen wurde vor Verwendung mit Methylenchlorid entfettet und dann im Hochvakuum getrocknet) befestigt und umgebogen. Dieser Kolben wird an Luft in ein auf 350°C vorgewärmtes Metallbad getaucht. Die Schmelze wird über einen KPG-Rührer an dem der mit dem Metall versehene Glasrührer befestigt ist, für 1 Stunde gerührt. Die Rührgeschwindigkeit wird so gewählt, dass sich die Schmelze nicht am Rührer hochzieht. Nach der angegebenen Zeit wird die Polycarbonatschmelze enthaltend das Metallfilterstück in eine Aluminiumschale gegossen.

Als Ergebnis der Fluoreszenzmessung erhält man über 140 counts/g (s. Tabelle 1).

**Vergleichsbeispiel 4** (mit unpassiviertem Metall unter Ar)

Der Versuch wurde wie in Beispiel 3 durchgeführt, jedoch wurde die Schmelze unter Schutzgasatmosphäre (Argon)gerührt.

Als Ergebnis der Fluoreszenzmessung erhält man 112,39 counts/g (s. Tabelle 1).

**Vergleichsbeispiel 5** (mit passiviertem Metall an Luft)

Der Versuch wurde wie in Beispiel 3 durchgeführt, jedoch wurde der Metallstreifen wie folgt behandelt: Das Metall wurde mit Methylenchlorid entfettet und im Vakuum getrocknet. Danach wird das Metall in einem Umluftwärmeschrank bei 350°C für 24 Stunden getempert. Der Metallstreifen wurde unmittelbar nach der Trocknung verwendet.

Als Ergebnis der Fluoreszenzmessung erhält man 1,45 counts/g (s. Tabelle 1Das Ergebnis der Fluoreszenzmessung zeigt, dass deutlich weniger fluoreszierende Partikel infolge der erfindungsgemäßen Vorbehandlung entstehen.

**Vergleichsbeispiel 6** (mit passiviertem Metall unter Argon)

Der Metallstreifen wurde wie in Beispiel 5 beschrieben behandelt. Der so vorbehandelte Metallstreifen wird dann gemäß Beispiel 3 in der Polymerschmelze unter Argon (statt Luft) im Kolben behandelt.

Als Ergebnis der Fluoreszenzmessung erhält man 1,59 counts/g (s. Tabelle 1).

Das Ergebnis zeigt, dass deutlich weniger fluoreszierende Partikel infolge der erfindungsgemäßen Vorbehandlung entstehen.

Die folgenden Versuche zeigen, dass die Vorbehandlung von Filtermetallteilen im Vergleich zur Passivierung von Filtermetallteilen ohne Vorbehandlung der Metallteile gemäß der Erfindung zu einer deutlichen Reduktion der fluoreszierenden Partikel im Polycarbonat führt:

**Vergleichsbeispiel 7** (Passivierung des Metalls in Citronensäure)

Das Metall wird vor dem Kontakt mit der Polycarbonatschmelze mit 10%iger Citronensäure bei 50°C für 1 Stunde behandelt und danach gut mit Wasser gespült und anschließend getrocknet. Das Metall wird nicht gemäß der Erfindung vorbehandelt. Die Temperung des Metalls in der Polymerschmelze erfolgt an Luft wie in Beispiel 3 beschrieben.

Als Ergebnis der Fluoreszenzmessung erhält man 46,33 counts/g (s. Tabelle 1).

Dieses Ergebnis der Fluoreszenzmessung zeigt, dass eine dem Stand der Technik entsprechende Passivierung der erfindungsgemäßen Methode deutlich unterlegen ist.

**Vergleichsbeispiel 8** (Passivierung mit Phenol)

Das Metall wird vor der Temperung in Polycarbonatschmelze mit Phenol bei 100°C für 1 Stunde behandelt. Das Metall wird nicht gemäß der Erfindung vorbehandelt. Die Temperung in der Polymerschmelze erfolgt an Luft wie in Beispiel 5 beschrieben.
Als Ergebnis der Fluoreszenzmessung erhält man 61,09 counts/g (s. Tabelle 1).
Dieses Ergebnis zeigt, dass eine dem Stand der Technik entsprechende Passivierung der erfindungsgemäßen Methode deutlich unterlegen ist.

**Vergleichsbeispiel 9** (Vergleichsversuch - Passivierung mit HNO3)

Das Metallvlies wird vor der Temperung in der Polycarbonatschmelze in Salpetersäure (20%) bei 80°C behandelt für eine Stunde behandelt (es wird mehrmals Wasserstrahlvakuum angelegt, um das Metall vollständig zu entgasen und mit der Passivierungslösung zu benetzen). Nach der Behandlung mit Salpetersäure wird das Metallvlies nach Neutralwaschen noch mehrfach mit Milliporewasser gespült und dann im Hochvakuum getrocknet. Das Metall wird nicht gemäß der Erfindung vorbehandelt. Die Temperung in Polymerschmelze erfolgt an Luft wie Beispiel 3 beschrieben.
Als Ergebnis der Fluoreszenzmessung erhält man 89,86 counts/g (s. Tabelle 1).

**Vergleichsbeispiel 10** (Passivierung gemäß JP 2001-026452)

Das entfettete Metallvlies wird vor der Temperung in der Polycarbonatschmelze wie folgt vorbehandelt:

Eine Lösung aus 15 g Natriumhydroxid, 3 g Natriumphosphat, 2 g Natriumnitrit, 2g Blei(VI)oxid und 0.1 g Eisenhydroxid (FeO(OH)) in 78 ml Wasser wird zum Rückfluss erhitzt. Das Metallfiltervlies wird in dieser Lösung für 15 Minuten behandelt. Nach Neutralwaschen mit Wasser wird noch mehrmals mit Milliporewasser gespült. Das Metall wird nicht gemäß der Erfindung vorbehandelt.

Die Temperung in der Polymerschmelze erfolgt an Luft wie Beispiel 3 beschrieben. Als Ergebnis der Fluoreszenzmessung erhält man 85,85 counts/g.

**Vergleichsbeispiel 11** (Vergleichsversuch - Passivierung gemäß US-A 4,518,440)

Ein entfettetes Metallfiltervlies wird vor der Temperung in der Polycarbonatschmelze wie folgt vorbehandelt:
Das Filtervlies wird für 5 Stunden bei 510°C in einem Umlufttrockenschrank gelagert. Danach wird das Metall mit einer Passivierungslösung, die wie folgt angesetzt wird behandelt:

2,5 g wasserfreie Oxalsäure, 1,3 g 30 %-ige Wasserstoffperoxidlösung und 0,1 g konzentrierte Schwefelsäure werden in 100 ml entmineralisiertem Wassser gelöst.

Das Filtervlies wird bei 60°C in dieser Lösung für 30 Minuten unter Rühren behandelt.
Danach wird das Filtervlies ausgiebig mit Wasser gespült und getrocknet. Das Metall wird nicht gemäß der Erfindung vorbehandelt.
Die Temperung in der Polymerschmelze erfolgt an Luft wie Beispiel 3 beschrieben.
Als Ergebnis der Fluoreszenzmessung erhält man 3,99 counts/g. Ferner sind die gebildeten Partikel im Vergleich zum Versuch in dem das Metallvlies erfindungsgemäß vorbehandelt wurde, deutlich größer (s. Tabelle 1).

**Vergleichsbeispiel 12** (Filter in ruhender Schmelze; unpassiviert;)

Aus einer Filterpackung (Diskfilter: Hydac Disc 12-63-M-44-2402107/Mat.319418 mit 5 $\mu$m Porengröße) werden 15mm x 15 mm x 2 mm große Stücke geschnitten.
Die 15mm x 15 mm x 2 mm großen Stücke wurden auf eine Nutsche gelegt und mit Wasserstrahlvakuum ein Chlorbenzol/Methylenchlorid-Gemisch(1:1, 200 ml) zum Entfetten durch das Filter gezogen. Anschließend wird das Filtervlies-Stück 5 min bei 200°C im Trockenschrank getrocknet.
Das Filtervlies-Stück wird nun zusammen mit 30 g getrocknetem (12 h, 120°C, Wasserstrahlvakuum) Polycarbonat-Granulat (Bayer MaterialScience AG, Makrolon® DPI-1265) in einem 50 ml Einhalskolben vorgelegt und die Atmosphäre im Kolben gegen Stickstoff ausgetauscht (3x evakuieren und mit Stickstoff begasen). Dann wird der Kolben mit Inhalt in einem Metallbad auf 340°C aufgeheizt. Anschließend wird die Temperatur 20 Minuten bei 340°C gehalten, anschließend bei dieser Temperatur mit Wasserstrahlvakuum evakuiert und 20 Minuten bei 340°C und Wasserstrahlvakuum gehalten, danach mit Stickstoff begast und weitere 50 Minuten bei 340°C gehalten und anschließend abgekühlt. Insgesamt wird die Polycarbonat-Schmelze mit dem Filtervlies also 90 Minuten bei 340°C getempert.

Das Filtervlies wird vor dem Erstarren der Polycarbonatschmelze entnommen. Die Polycarbonatschmelze wird in Methylenchlorid gelöst und die fluoreszierenden Anteile gemäß dem geschilderten Verfahren bestimmt

**Vergleichsbeispiel 13** (Ruhende Schmelze; mit $H_3PO_4$ passiviertes Filtervlies)

Das Filtervlies-Stück wurde nach dem Entfetten 30 min mit 85%ige Phosphorsäure bei 100°C passiviert, mit Wasser gespült, getrocknet und dann wie im Beispiel 12 beschrieben eingesetzt. Das Metall wird nicht gemäß der Erfindung vorbehandelt. Die fluoreszierenden Anteile werden nach dem beschriebenen Verfahren bestimmt. Das Ergebnis ist in Tabelle 2 gezeigt.

**Vergleichsbeispiel 14** (Ruhende Schmelze; mit $HNO_3$ passiviertes Filtervlies''')

Das Filtervlies-Stück wurde nach dem Entfetten 30 min mit 65%ige Salpetersäure bei 100°C passiviert, mit Wasser gespült, getrocknet und dann wie in Beispiel 12 beschrieben eingesetzt. Das Metall wird nicht gemäß der Erfindung vorbehandelt.

Die fluoreszierenden Anteile werden nach dem beschriebenen Verfahren bestimmt. Das Ergebnis ist Tabelle 2 gezeigt.

**Vergleichsbeispiel 15** (Ruhende Schmelze; Ausbrennen eines "unpassiviertes Filtervlies''')

Das, einem dem Beispiel 12 entsprechenden Versuch, entnommene Filtervlies-Stück wird in einer Bunsenbrennerflamme 5 min ausgebrannt, abgekühlt und in einen analogen Versuch (wie Beispiel 12 nach der Entfettung und Trocknung) eingesetzt. Die fluoreszierenden Anteile werden nach dem beschriebenen Verfahren bestimmt. Das Ergebnis ist in Tabelle 2 gezeigt.

**Beispiel 16** (Ruhende Schmelze; erfindungsgemäß)

Ausbrennen eines "mit $H_3PO_4$ passivierten Filtervlies"

Das einem dem Beispiel 13 entsprechenden Versuch mit Phosphorsäure vorbehandeltem Filtervlies-Stück, wird in einer Bunsenbrennerflamme 5 min ausgebrannt, abgekühlt und in einen analogen Versuch (wie Beispiel 12 nach der Entfettung und Trocknung) eingesetzt. Die fluoreszierenden Anteile werden nach dem beschriebenen Verfahren bestimmt. Das Ergebnis ist Tabelle 2 gezeigt.

**Beispiel 17** (Ruhende Schmelze; erfindungsgemäß)

Ausbrennen eines "mit $HNO_3$ passiviertes Filtervlies".

Das einem dem Beispiel 14 entsprechenden Versuch mit Salpetersäure vorbehandeltem Filtervlies-Stück, wird in einer Bunsenbrennerflamme 5 Minuten ausgebrannt, abgekühlt und in einen analogen

Versuch (wie Beispiel 12 nach der Entfettung und Trocknung) eingesetzt. Die fluoreszierenden Anteile werden nach dem beschriebenen Verfahren bestimmt. Das Ergebnis ist Tabelle 2 gezeigt.

**Vergleichsbeispiel 18** (erfindungsgemäß)

Ausglühen eines "nicht vorbehandelten Filtervlies"

Das, einem dem Beispiel 12 entsprechenden Versuch, entnommene Filtervlies-Stück wird in einem Muffelofen 10 Minuten bei 800°C ausgeglüht, abgekühlt und in einen analogen Versuch (wie Beispiel 12 nach der Entfettung und Trocknung) eingesetzt. Die fluoreszierenden Anteile werden nach dem beschriebenen Verfahren bestimmt. Das Ergebnis ist in Tabelle 2 gezeigt.

**Beispiel 19** (erfindungsgemäß)

Ausglühen eines "mit $H_3PO_4$ passiviertes Filtervlies"

Das einem dem Beispiel 13 entsprechenden Versuch mit Phosphorsäure vorbehandelte Filtervlies-Stück wird in einem Muffelofen 10 Minuten bei 800 °C ausgeglüht, abgekühlt und in einen analogen Versuch (wie Versuch 12 nach der Entfettung und Trocknung) eingesetzt. Die fluoreszierenden Anteile werden nach dem beschriebenen Verfahren bestimmt. Das Ergebnis ist Tabelle 2 gezeigt.

**Beispiel 20** (erfindungsgemäß)

Ausglühen eines "mit $HNO_3$ passiviertes Filtervlies"

Das einem dem Beispiel 14 entsprechenden Versuch mit Salpetersäure vorbehandelte Filtervlies-Stück wird in einem Muffelofen 10 Minuten bei 800 °C ausgeglüht, abgekühlt und in einen analogen Versuch (wie Versuch 12 nach der Entfettung und Trocknung) eingesetzt. Die fluoreszierenden Anteile werden nach dem beschriebenen Verfahren bestimmt. Das Ergebnis ist Tabelle 2 gezeigt.

**Referenzbeispiel 21** (Blindwert ohne Metall)

Dieses Beispiel entspricht Beispiel 12, jedoch wird der Polycarbonatschmelze kein Filtervlies zugesetzt.

**Tabelle 1: Metallfilter in Polycarbonatschmelze (gerührt)**

| Bsp. | Beschreibung | Durchführung | Partikelanzahl (fluoreszierend) | Partikelgrößendichte Counts $\mu$m/g |
|---|---|---|---|---|
| 1 | Blindwert | 350°C / Luft / ohne Metall | 0,68 counts / g | 30,5 |
| 2 | Blindwert | 350°C / Argon / ohne Metall | 1,03 counts / g | 44,6 |
| 3 | Vergleichsversuch | 350°C / Luft / mit Metall (nicht passiviert) | > 140 counts/g | 16815,2 |
| 4 | Vergleichsversuch | 350°C / Argon / mit Metall (nicht passiviert) | 112,39 counts / g | 12079,1 |
| 5 | Vergleichsversuch | 350°C / Luft / mit Metall (passiviert) | 1,45 counts / g | 73,6 |
| 6 | Vergleichsversuch | 350°C / Argon / mit Metall (passiviert) | 0,91 counts / g | 31,5 |
| 7 | Vergleichsversuch | 350°C / Luft / mit Metall (passiviert nach Stand der Technik) Citronensäure | 46,33 counts / g | 6086,1 |
| 8 | Vergleichsversuch | 350°C / Luft / mit Metall (passiviert nach Stand der Technik) Phenol | 61,09 counts / g | 6177,9 |
| 9 | Vergleichsversuch | 350°C / Luft / mit Metall (passiviert nach Stand der Technik) HNO3 | 89,86 counts/g | 10948 |
| 10 | Vergleichsversuch | 350°C / Luft / mit Metall (passiviert gemäß JP 2001-026542 | 85,85 counts / g | 12779,6 |
| 11 | Vergleichsversuch | 350°C / Luft / mit Metall (passiviert gemäß US-A 4,518,440) | 3,99 counts / g | 477,1 |

Die Ergebnisse zeigen, dass die erfindungsgemäße Methode zu einer signifikant geringeren Bildung fluoreszierender Stippen führt. Die Werte, die aus dem erfindungsgemäßen Verfahren resultieren, sind nicht oder nur geringfügig höher im Vergleich mit einer Temperung von Polycarbonat, welches nicht in Kontakt mit einer Metalloberfläche stand. Dies bedeutet, dass die erfindungsgemäße Methode eine effektive Methode ist, die Bildung fluoreszierender Stippen zu vermeiden. Alle anderen, dem Stand der Technik entsprechenden Vorbehandlungsmethoden sind deutlich weniger effektiv, was die Bildung fluoreszierender Partikel betrifft.

**Tabelle 2 Metallfilter in Polycarbonatschmelze (nicht gerührt)**

| Beispiel | Beschreibung | Beschreibung | Partikelanzahl (fluoreszierend) (counts/g PC) |
|---|---|---|---|
| 12 | Vergleichsversuch | unpassiviertes Filtervlies | 60,4 |
| 13 | Vergleichsversuch | mit $H_3PO_4$ passiviertes Filtervlies | 63,3 |
| 14 | Vergleichsversuch | mit $HNO_3$ passiviertes Filtervlies''' | 81,5 |
| 15 | Vergleichsversuch | Filtervlies in Bunsenbrennerflamme 5 Min. ausgebrannt | 1,4 |
| 16 | erfindungsgemäß | Ausbrennen eines mit $H_3PO_4$ passiviertes Filtervlies | 0,4 |
| 17 | erfindungsgemäß | Ausbrennen eines mit $HNO_3$ passiviertes Filtervlies | 0,2 |
| 18 | Vergleichsversuch | Ausglühen eines unpassiviertes Filtervlies | 2,2 |
| 19 | erfindungsgemäß | Ausglühen eines mit $H_3PO_4$ passiviertes Filtervlies | 0,7 |
| 20 | erfindungsgemäß | Ausglühen eines mit $HNO_3$ passiviertes Filtervlies | 1,2 |
| 21 | Blindwert | ohne Zusatz eines Filterstreifens | 0,7 |

Die Ergebnisse zeigen klar, dass nicht die Passivierung mittels Phosphor - oder Salpetersäure eine signifikante Verminderung der fluoreszierenden Teilchen bewirkt, sondern die thermische Behandlung mittels Bunsenbrennerflamme oder Muffelofen. Ein mit Mineralsäure vorpassiviertes Metall kann allerdings durch eine weitere thermische Behandlung eine für Polycarbonat günstige Passivierung erhalten.

Die unterschiedlichen Werte zwischen Beispielen, in denen die Polymerschmelze gerührt wurde, verglichen mit denen, in welchen die Polymerschmelze stationär mit dem Metall in Kontakt stand, erklären sich durch die unterschiedlichen Verfahren (Durchspülen des Filters).

**Patentansprüche**

1.  Verfahren zur Behandlung von Metalloberflächen, die bei der Herstellung oder Verarbeitung von Polycarbonaten mit der Polymerschmelze in Kontakt kommen, **dadurch gekennzeichnet, dass** in einem ersten Schritt die Metalloberflächen vor der thermischen Behandlung mit Mineralsäure behandelt werden und im zweiten Schritt die Metalloberflächen in oxidativer Atmosphäre thermisch vorbehandelt werden.

2.  Verfahren gemäß Anspruch 1, wobei die thermische Vorbehandlung bei Temperaturen von 200 bis 1200°C durchgeführt wird

3.  Verfahren zur Schmelzefiltration von Polycarbonat mittels Edelstahlfilter, wobei das Schmelzefilter vor Kontakt mit der Polymerschmelze gemäß Anspruch 1 bis 3 behandelt wurde

4.  Verfahren zur Herstellung oder Verarbeitung von Polycarbonat gemäß Anspruch 4, wobei Metalloberflächen von insbesondere geheizten Rohren, Kesseln, Extruderteilen bei Temperaturen von 200 bis 1200°C gemäß Anspruch 1 bis 3 vor Einsatz behandelt wurden.

5.  Verfahren nach Anspruch 1 zur Behandlung von Metalloberflächen, die bei der Herstellung von Polycarbonaten mit der Polymerschmelze in Kontakt kommen.

**Claims**

1. A process for the treatment of metal surfaces coming into contact with the polymer melt during the production or processing of polycarbonates, **characterised in that**, in a first step, the metal surfaces are treated with mineral acid prior to the thermal treatment and, in the second step, the metal surfaces are thermally pre-treated in an oxidative atmosphere.

2. Process according to claim 1, wherein the thermal pre-treatment is carried out at temperatures of 200 to 1200°C.

3. Process for the melt filtration of polycarbonate using a stainless steel filter, wherein the melt filter has been treated according to claims 1 to 3 prior to contact with the polymer melt.

4. Process for the production or processing of polycarbonate according to claim 4, wherein metal surfaces of, in particular, heated pipes, tanks, extruder parts have been treated at temperatures of 200 to 1200°C according to claims 1 to 3 before use.

5. Process according to claim 1 for the treatment of metal surfaces which come into contact with the polymer melt during the production of polycarbonates.

**Revendications**

1. Procédé de traitement de surfaces métalliques qui rentrent en contact avec la masse fondue polymère lors de la fabrication ou de l'usinage de polycarbonates, **caractérisé en ce que**, lors d'une première étape, les surfaces métalliques sont traitées avant le traitement thermique avec un acide minéral et, lors de la seconde étape, les surfaces métalliques sont prétraitées thermiquement dans une atmosphère oxydante.

2. Procédé selon la revendication 1, dans lequel le prétraitement thermique est réalisé à des températures de 200 à 1 200 °C.

3. Procédé de filtration à l'état fondu de polycarbonate au moyen d'un filtre en acier inoxydable, dans lequel le filtre de masse fondue a été traité selon les revendications 1 à 3 avant le contact avec la masse fondue polymère.

4. Procédé de fabrication ou d'usinage de polycarbonate selon la revendication 4, dans lequel des surfaces métalliques notamment de tubes chauffés, de cuves, de parties d'extrudeuse ont été traitées à des températures de 200 à 1 200 °C selon les revendications 1 à 3 avant l'utilisation.

5. Procédé selon la revendication 1, pour le traitement de surfaces métalliques qui rentrent en contact avec la masse fondue polymère lors de la fabrication de polycarbonates.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 02233733 A
- EP 1222231 B1
- WO 2000064554 A
- WO 9954381 A
- WO 2000007684 A
- JP 07171873 B
- EP 0410425 A2
- JP 2002126425 B
- EP 1156071 A
- US 4518440 A
- JP 4161210 A
- JP 2003048975 B
- EP 0517044 A
- US PS2999835 A
- US 3148172 A
- US 2991273 A
- US 3271367 A
- US 4982014 A
- US 2999846 A
- DE 1570703
- DE 2063050
- DE 2036052
- DE 2211956
- DE 3832396
- FR 1561518
- BE 866991 A
- EP 0411510 A
- US 4980105 A
- DE 3332065 A
- EP 0267025 A
- EP 0460450 A
- EP 003996 A
- EP 0256003 A
- US 4423207 A
- WO 0105866 A
- WO 0105867 A
- US 3494885 A
- US 4386186 A
- US 4661580 A
- US 4680371 A
- US 4680372 A
- EP 26120 A
- EP 26121 A
- EP 26684 A
- EP 28030 A
- EP 39845 A
- EP 91602 A
- EP 97970 A
- EP 79075 A
- EP 146887 A
- EP 156103 A
- EP 234913 A
- EP 240301 A
- DE 1495626 A
- DE 2232977 A
- EP 1199325 A
- JP 2001026542 A
- US 399 A

**In der Beschreibung aufgeführte Nicht-Patentliteratur**

- **ASAMI et al.** *Surface and Interface Analysis,* 2004, vol. 36 (3), 220-224
- **VIRTANEN et al.** *Material Science Forum,* 1995, 185-188
- *Passivation of Metals and Semiconductors,* 965-974
- **H. SCHNELL.** Chemistry and Physics of Polycarbonates, Polymer Reviews. Interscience Publishers, 1964, vol. 9, 33 ff
- Condensation Polymers by Interfacial and Solution Methods. **PAUL W. MORGAN.** Polymer Reviews. Interscience Publishers, 1965, vol. 10, 325
- Polycarbonate. **DRES. U. GRIGO ; K. KIRCHER ; P. R- MÜLLER.** Becker/Braun, Kunststoff-Handbuch, Band 3/1, Polycarbonate, Polyacetale, Polyester, Celluloseester. Carl Hanser Verlag, 1992, vol. 3/1, 118-145
- **H. SCHNELL.** Chemistry and Physics of Polycarbonates. Interscience Publishers, 1964, 28ff, , S.102ff
- **D.G. LEGRAND ; J.T. BENDLER.** Handbook of Polycarbonate Science and Technology. Marcel Dekker, 2000, 72ff
- Thermische Trennverfahren. VCH Verlagsanstalt, 1988, 114